Europäisches Patentamt

European Patent Office

Office européen des brevets

(19)

(11) Veröffentlichungsnummer : **0 014 314**
**B1**

# (12) EUROPÄISCHE PATENTSCHRIFT

(45) Veröffentlichungstag der Patentschrift :
26.01.83

(51) Int. Cl.³ : **C 08 F 10/00, C 08 F 6/10**

(21) Anmeldenummer : **80100053.0**

(22) Anmeldetag : **07.01.80**

(54) **Verfahren zur kontinuierlichen Entfernung von Restkohlenwasserstoffen aus Polyolefinen und Vorrichtung zur Durchführung des Verfahrens.**

(30) Priorität : **31.01.79 DE 2903586**

(43) Veröffentlichungstag der Anmeldung :
**20.08.80 Patentblatt 80/17**

(45) Bekanntmachung des Hinweises auf die Patenterteilung : **26.01.83 Patentblatt 83/04**

(84) Benannte Vertragsstaaten :
**DE FR GB**

(56) Entgegenhaltungen :
**EP A 0 001 590**
**DE B 1 089 547**
**FR A 1 274 455**
**FR A 1 455 222**
**FR A 2 364 230**

(73) Patentinhaber : **HOECHST AKTIENGESELLSCHAFT**
**Postfach 80 03 20**
**D-6230 Frankfurt/Main 80 (DE)**

(72) Erfinder : **Kaiser, Karl, Dr.**
**Hubert-Geuer-Strasse 71**
**D-5040 Brühl (DE)**
Erfinder : **Willms, Robert**
**Am grünen Weg 3**
**D-5030 Hürth-Knapsack (DE)**
Erfinder : **Kuxdorf, Bernhard**
**Von Westerburgstrasse 12**
**D-5040 Brühl (DE)**

EP 0 014 314 B1

Verfahren zur kontinuierlichen Entfernung von Restkohlenwasserstoffen aus Polyolefinen und
Vorrichtung zur Durchführung des Verfahrens

Es ist bekannt, α-Olefine sowie deren Mischungen nach dem Niederdruckverfahren von Ziegler mittels Katalysatoren, die Verbindungen der Elemente der IV. bis VI. Nebengruppe des Periodensystems in Kombination mit metallorganischen Verbindungen der Elemente der I. bis III. Gruppe des Periodensystems enthalten, in gesättigten, flüssigen Kohlenwasserstoffen mit 6-11 C-Atomen oder entsprechenden Gemischen, wie z.B. Benzin, zu polymerisieren. Im weiteren Aufarbeitungsverlauf des Polymerisates werden die im Benzin, suspendierten Polyolefine durch Filtration in Filterpressen vom Dispergiermittel abgetrennt. Die benzinfeuchten Polymerisate können dann auf verschiedene Art und Weise vom noch anhaftenden Dispergiermittel befreit werden, beispielsweise durch unmittelbare Trocknung im Kontakttrockner oder mit heißer Luft bzw. mit Inertgasen oder gemäß DE-AS 1 089 547 durch intensive Wasserdampfdestillation.

In der Betriebspraxis hat es sich aus verschiedenen Gründen als zweckmäßig erwiesen, die noch benzinhaltigen Polymerisate in Wasser zu dispergieren und das Benzin aus der wässerigen Phase unter Rühren in Form von azeotropan Gemischen mit Wasser abzudestillieren. Diese Arbeitsweise ist aufgrund des relativ hohen Energieverbrauchs für die Destillation des Restbenzins als nachteilig zu betrachten. Außerdem erfordert die azeotrope Destillation des Benzins mit Wasser aufgrund der Bildung unterschiedlicher azeotroper Gemische eine besondere Ausgestaltung der Destillationskolonne im Hinblick auf die erwünschte Trennwirkung.

Es ist außerdem nach der DE-OS 2 521 780 ein Verfahren zur Entfernung von Monomeren aus einer wässerigen Dispersion eines Polymeren, das mindestens 50 Gew.% polymerisiertes Vinylchlorid enthält, bekannt, welches dadurch gekennzeichnet ist, daß man die Dispersion in den oberen Teil einer mit Siebplatten ausgestatteten Kolonne einleitet und im Gegenstrom mit etwa 100° bis 150 °C heißem Wasserdampf unter einem Druck von etwa 600-1 200 Torr während etwa 10 Sekunden bis 20 Minuten abzieht, wonach man die Polymerdispersion am Boden der Kolonne abzieht, während das über Kopf der Kolonne abströmende Dampfgemisch zur Gewinnung einer wässerigen Phase sowie der Monomeren stufenweise kondensiert wird.

Vorbeschriebene Arbeitsweise ist zur Entfernung von Restkohlenwasserstoffen aus Polyolefinen aus folgenden Gründen nicht geeignet :

Polyvinylchlorid mit einer Dichte von mehr als 1,4 ist im Gegensatz zu den Polyolefinen schwerer als Wasser, so daß sich das als wässerige Dispersion am Kolonnenkopf aufgegebene Polyvinylchlorid in der Kolonne im Gegenstrom zum aufsteigenden Dampf von oben nach unten bewegt. Demgegenüber gehorchen die in Bezug auf Wasser spezifisch leichteren Polyolefine dem Strömungsprinzip des Polyvinylchlorids nicht, indem sie auf der Wasseroberfläche schwimmen und somit in einer Kolonne nicht von oben nach unten ablaufen. Außerdem ist das nach dem Verfahren der DE-OS 2 521 780 zu entfernende Vinylchlorid unter Normalbedingungen gasförmig, während die aus Polyolefinen zu entfernenden Restkohlenwasserstoffe mit einem Siedebereich von 60-190 °C flüssig sind. Ferner ist zu berücksichtigen, daß das Vinylchlorid in der wässerigen PVC-Dispersion nur in ppm-Mengen vorliegt und deshalb die Beschaffenheit der Dispersion nicht beeinflußt. Hingegen enthalten die Polyolefindispersionen nach der Erfindung erheblich größere Mengen an abzutrennenden Produkten, die einerseits die Grenzflächenaktivität der Dispersion beträchtlich verändern und andererseits mit dem Dispergiermittel Azeotrope bilden, so daß bei der Benzinentfernung neben dem Diffusionsproblem noch zusätzliche Destillationsschwierigkeiten, wie Feststoffabscheidungen oder Schaumbildung, zu bewältigen sind.

Schließlich betrifft der Gegenstand der deutschen Offenlegungsschrift Nr. 2 746 909 ein Verfahren zur Entfernung von gesättigten flüssigen Restkohlenwasserstoffen mit mindestens 5 C-Atomen im Molekül oder deren Gemische aus Polyolefinen, die bei der katalytischen α-Olefinpolymerisation in Gegenwart von an sich bekannten Katalysatormischungen aus Schwermetallverbindungen und metallorganischen Verbindungen erhalten wurden, mittels Wasser und Dampf, wobei der Restkohlenwasserstoffgehalt im Polyolefin etwa 10-50 Gew.% beträgt, welches dadurch gekennzeichnet ist, daß man

a) das kohlenwasserstoffhaltige Polyolefin in eine wässerige, emulgatorhaltige Lösung, deren Oberflächenspannung bei 20 °C gegen Luft 50-68 dyn/cm ($10^{-3}$ N/m) beträgt, einträgt und das Gemisch durch Rühren in eine homogene Dispersion überführt, wobei der Anteil des Polyolefins in der wässerigen Dispersion 10-40 Gew.% beträgt ; daß man

b) die Dispersion in den oberen Teil einer mit mindestens 5 Siebböden ausgestatteten Kolonne einleitet und im Gegenstrom mit 100 bis 120 °C heißem Wasserdampf behandelt, wobei der freie Querschnitt der einzelnen Siebboden in der Kolonne sich vom untersten bis zum obersten Boden von 3 % bis auf 90 % der Bodenfläche kontinuierlich erhöht und im etwa gleichen Verhältnis der Abstand der einzelnen Böden von unten nach oben zunimmt, und daß man

c) vom Sumpf der Kolonne die Kohlenwasserstofffreie wässerige Polyolefindispersion abzieht und das Polyolefin vom Wasser trennt, während am Kolonnenkopf ein Kohlenwasserstoff/Wasser-Azeotrop bzw. Azeotropengemisch abdestilliert, das in einem Kühler kondensiert und in einem nachfolgenden Abscheider getrennt wird.

Das Hauptproblem bei der Entfernung von Restkohlenwasserstoffen aus Polyolefindispersionen in Siebbodenkolonnen ergibt sich durch die geringe Dichte des Feststoffes im Vergleich zur flüssigen Phase. Dies hat zur Folge, daß bei der Behandlung der Dispersion mit Dampf oder auch einem Inertgas der spezifisch leichtere Feststoff, der auf der flüssigen Phase schwimmt, zum Teil in den Gasraum geschleudert wird und an der Unterseite der Siebböden nach längerer Betriebszeit eine Verstopfung der Sieblöcher herbeiführt. Dieser unerwünschte Effekt wird auch bei der Verfahrensweise nach der deutschen Offenlegungsschrift Nr. 2 746 909 nicht vermieden.

Es wurde nunmehr gefunden, daß die vorerwähnte Verstopfung der Siebböden verhindert werden kann, wenn man durch eine bestimmte Veränderung der Konstruktionsmerkmale einer herkömmlichen Siebbodenkolonne und Einhalten bestimmter Verfahrensmaßnahmen beim Betrieb der Kolonne auf den einzelnen Kolonnenböden periodisch ein Durchregnen der flüssigen Phase durch die Sieböffnungen bewirkt und dadurch einen Reinigungseffekt erzielt.

Die Erfindung betrifft somit ein Verfahren zur Entfernung von gesättigten flüssigen Restkohlenwasserstoffen mit mindestens 5 C-Atomen im Molekül oder deren Gemische aus Polyolefin, die bei der katalytischen Olefinpolymerisation in Gegenwart von an sich bekannten Katalysatormischungen aus Schwermetallverbindungen und metallorganischen Verbindungen erhalten wurden, mittels Wasser und Dampf, wobei der Restkohlenwasserstoffgehalt im Polyolefin etwa 10-50 Gew.% beträgt, welches dadurch gekennzeichnet ist, daß man

A. das kohlenwasserstoffhaltige Polyolefin in eine wässerige, emulgatorhaltige Lösung, deren Oberflächenspannung bei 20 °C gegen Luft 50-68 dyn/cm ($10^{-3}$ N/m) beträgt, einträgt und das Gemisch durch Rühren in eine homogene Dispersion überführt, wobei der Anteil des Polyolefins in der wässerigen Dispersion 10-40 Gew.% beträgt ; daß man

B. die Dispersion in dem Maße in den oberen Teil einer mit 5-30 Siebböden und Überlaufwehren ausgestatteten Kolonne einleitet und im Gegenstrom mit 100 bis 120 °C heißem Wasserdampf behandelt, daß

a) das Verhältnis von Dispersionsvolumen [$m^3$] auf einem Siebboden zu freiem Querschnittsanteil des Siebbodens [$m^2$] 1 bis 8, vorzugsweise 1,5 bis 2,5, beträgt, daß

b) das Verhältnis von eingeleiteter Dispersionsmenge [$m^3$] pro Zeiteinheit (h) zu freiem Querschnittsanteil des Siebbodens [$m^2$] 150 bis 600 beträgt, daß

c) die spezifische Belastung der Kolonne, definiert durch die pro Zeiteinheit [h] und pro $m^2$ Kolonnenquerschnittsfläche zugeführte Dispersionsmenge [$m^3$], 5 bis 35, vorzugsweise 15 bis 30, beträgt, daß

d) die spezifische Dampfbelastung der Kolonne, definiert durch die pro Zeiteinheit [h] und pro $m^2$ Kolonnenquerschnittsfläche eingeleitete Dampfmenge, 1 000 bis 4 000, vorzugsweise 1 500 bis 2 500 [$kg/(m^2 \cdot h)$], ist, daß

e) die mittlere Verweilzeit der Dispersion auf dem einzelnen Siebboden 0,1 bis 2,5, vorzugsweise 0,3 bis 0,6, Minuten beträgt, und daß man

C. vom Sumpf der Kolonne die kohlenwasserstoffreie wässerige Polyolefindispersion abzieht und das Polyolefin vom Wasser trennt, während am Kolonnenkopf ein Kohlenwasserstoff/Wasser-Azeotrop bzw. Azeotropengemisch abdestilliert, das in einem Kühler kondensiert und in einem nachfolgenden Abscheider getrennt wird.

Die erfindungsgemäß von Polyolefinen, wie z.B. Polyäthylen oder Polypropylen, zu entfernenden Restkohlenwasserstoffe enthalten im allgemeinen 6-11 Kohlenstoffatome und sind im Polyolefin in einer Menge von 20 bis 50 Gew.% enthalten. Insbesondere handelt es sich bei den Restkohlenwasserstoffen um Hexan bzw. im Falle von Restkohlenwasserstoffgemischen um Benzin mit einem Siedebereich von etwa 60-190 °C.

Es hat sich als zweckmäßig erwiesen, dem oberen Teil der Siebbodenkolonne eine gegebenenfalls vorerwärmte wässerige Polyolefindispersion zuzuführen. Um ein Schäumen der Dispersion in der Kolonne zu vermeiden, soll die Oberflächenspannung der wässerigen, emulgatorhaltigen Lösung bei 20 °C gegen Luft vorzugsweise zwischen 61 und 68 dyn/cm betragen. Bewähret Emulgatoren für vorgenannten Zweck sind beispielsweise äthoxylierte Stearinsäure mit 30 Mol Äthylenoxid. Für einen reibungslosen Ablauf der Destillation ist zu beachten, daß die Temperatur am Kolonnenkopf über dem Siedepunkt des abzutrennenden Kohlenwasserstoff/Wasser-Azeotrops liegt.

Ein weiterer Gegenstand der Erfindung ist die Vorrichtung zur Durchführung des Verfahrens. Eine ähnliche Vorrichtung wird bereits in der deutschen Offenlegungsschrift 25 50 023 beschrieben, welche aus einer modifizierten Siebbodenkolonne mit mehreren, in einem Kolonnenmantel übereinander und mit gleichem Abstand voneinander angeordneten gelochten Böden besteht, wobei zwischen jedem Boden und dem Kolonnenmantel ein über den Umfang gleichmäßiger, möglichst kleiner Spalt freigelassen ist, und wobei jeder Boden von einem exzentrisch angeordneten Ablaufschacht durchdrungen ist, und wobei oberhalb jedes Bodens ein exzentrisch angeordneter Zulaufschacht endet, und wobei unterhalb des Zulaufschachtes auf dem Boden eine Fläche undurchlässig ist, welche ein- bis zweimal so groß ist, wie die Querschnittsfläche des Zulaufschachtes ist.

Die Merkmale der Kolonne nach der Erfindung unterscheiden sich jedoch von der Kolonne gemäß der DE-OS 25 50 023 dadurch, daß

a) das Verhältnis von Bodenabstand zu Höhe des Ablaufschachtes 4-5 beträgt, daß

b) das Verhältnis von Höhe des Ablaufschachtes zu Kolonnendurchmesser 1,1 bis 0,1 beträgt, daß

c) das Verhältnis von Höhe des Ablaufschachtes zu Lochdurchmesser der gelochten Böden 70 bis 220 beträgt, daß

d) das Verhältnis von Höhe des Ablaufschachtes zu Abstand zwischen dem unteren Ende des Zulaufschachtes und dem darunter befindlichen Boden 2,5 bis 9 beträgt, daß

e) die Bodenzahl 5-30 beträgt, und daß

f) die freie Querschnittsfläche 3-10 % der Kolonnenquerschnittsfläche beträgt.

Die Schwierigkeiten, die der Lösung der erfindungsgemäßen Aufgabe entgegenstanden, resultieren aus der Tatsache, daß die zum Dispergieren des Polyolefins in Wasser erforderliche Emulgatorzugabe einerseits und der destillationsbedingte, graduell von Boden zu Boden abgestufte Benzingehalt andererseits die Beschaffenheit der Dispersion, bezogen auf die Betriebsbedingungen einer Destillationskolonne, außerordentlich ungünstig beeinflussen. Bei der destillativen Trennung einer Wasser/Benzin/Polyolefin-Dispersion in einer üblichen Siebbodenkolonne mit einheitlichem freiem Querschnitt der einzelnen Siebböden sowie einheitlichem Bodenabstand bildet sich im Oberteil der Kolonne ein Dispersionsschaum, der unter den Betriebsbedingungen einer Destillation nicht nach unten in Richtung Sumpfteil abläuft, sondern sich zunächst staut und dann über den Kolonnenkopf ausgetragen wird. Die Lösung der vorliegender Problematik wird darüberhinaus noch dadurch erschwert, daß das spezifische Gewicht der auf den verschiedenen Kolonnenböden sich bildenden Polyolefindispersionen in unübersichtlicher Weise sowohl vom Benzingehalt und der Emulgatormenge als auch von der Strömungsgeschwindigkeit in den Öffnungen der Siebböden abhängt. Da aber die obengenannten Faktoren von Boden zu Boden variieren, ist es außerordentlich schwierig, bei Anwendung bekannter Maßnahmen auf allen Böden gleichzeitig ein stabiles Betriebsgleichgewicht herzustellen, so daß über Kopf das Benzin quantitativ als Wasserazeotrop abdestilliert und das Polyolefin benzinfrei im Sumpf der Destillation anfällt.

Mit der erfindungsgemäßen Arbeitsweise und Kolonnenkonstruktion wurden Arbeitsbedingungen gewählt, bei denen auch die Unterseiten der Siebböden frei von Polymerablagerungen blieben. Es ergaben sich auch keine Schaumprobleme auf den einzelnen Böden, die einen größeren Bodenabstand besitzen als übliche Siebbodenkolonnen. Entgegen der üblichen Siebbodenauslegung wurde im Falle der erfindungsgemäßen Siebböden ein freier Querschnittsanteil gewählt, der bei der gegebenen Gasbelastung das gewünschte Durchregnen der Dispersion durch die Siebböden periodisch bewirkt. Durch die Wahl der Lochgröße wird dabei die Regenmenge in gewissen Grenzen gehalten, damit die Verweilzeit der Dispersion auf dem Boden nicht zu sehr beeinträchtigt wird. Man bewegt sich mit der Lochgröße in einem Grenzbereich, wo ein Durchregnen gerade noch möglich ist. Bei den im Kolonnenbau üblichen Wehrhöhen und den erfindungsgemäß vorgeschlagenen Lochdurchmessern tritt der erwünschte Regeneffekt nicht auf. Erst bei Wehrhöhen weit über das übliche Maß setzt sich das Gas-Flüssigkeits-Feststoffgemisch auf dem Siebboden mehr und mehr in Bewegung und bewirkt dann ein lokal wechselndes periodisches Durchregnen. Das ist beispielsweise bei einer Wehrhöhe von 100-500 mm der Fall.

Der Gegenstand der Erfindung ist als technisch fortschrittlich zu bezeichnen, da er im Gegensatz zu der bisher praktizierten Verfahrensweise, bestehend in der Entfernung der Restkohlenwasserstoffe vom Polyolefin durch Wasserdampfdestillation, energiesparend ist. Das Verfahren kann außerdem kontinuierlich durchgeführt werden, wobei eine Verstopfungsgefahr der Siebböden durch Polymerablagerungen an deren Unterseite vermieden wird.

## Beispiel 1

Aus der Produktionsanlage von Polypropylen wurde über einen Zeitraum von 12 Tagen laufend eine wässerige Polypropylensuspension abgezogen, welche etwa 26 Gew.% Feststoff enthielt und einen Restbenzingehalt von etwa 4 Gew.%, bezogen auf den Feststoff, aufwies. Der Siedebereich des Restbenzins betrug 140-190 °C.

Zur Entfernung des Restbenzins aus der Suspension wurden letzterer zunächst etwa 100 ppm einer mit 30 Mol Äthylenoxid äthoxylierten Stearinsäure als Emulgator zugefügt, so daß die Oberflächenspannung der Suspension bei 20 °C gegen Luft 60 dyn/cm betrug. Die Suspension wurde in einer Menge von 3,5 m³/h in den oberen Teil einer Siebbodenkolonne eingeleitet und im Gegenstrom mit 105 °C heißem Wasserdampf behandelt. Die Temperatur am Kolonnenkopf betrug 102 °C und der Druck am untersten Siebboden 1,28 bar. Das Verhältnis von Dispersionsvolumen auf einem Siebboden zu freiem Querschnittsanteil des Siebbodens betrug 2 m³/m², das der eingeleiteten Dispersionsmenge pro Zeiteinheit zum freien Querschnittsanteil des Siebbodens 464 m³/m² · h.

Schließlich betrug die spezifische Belastung der Kolonne mit der Suspension 28 m³/m² · h und die spezifische Dampfbelasting der Kolonne 1 800 kg/m² · h. Auf den Kolonnenböden stellte sich eine mittlere Verweilzeit der Suspension von 0,3 Minuten ein. Die im Sumpf der Kolonne anfallende Suspension wies einen Benzinrestgehalt von 0,9 Gew.% auf. Über Kopf der Kolonne wurde ein Benzin-Wasserdampfgemisch abgezogen.

Die Siebbodenkolonne besaß folgende Konstruktionsmerkmale:

| | |
|---|---|
| a) Höhe der Kolonne : | 4,2 m |
| b) Durchmesser der Kolonne : | 0,4 m |
| c) Anzahl der Siebböden mit Überlaufwehren : | 7 |
| d) Höhe der Überlaufwehre : | 140 mm |
| e) Abstand des Zulaufschachtes zum nächsten Boden : | 30 mm |
| f) Bodenabstand : | 0,6 m |
| g) Freier Gasraum über dem obersten Boden : | 0,075 $m^3$ |
| h) Freier Querschnitt der einzelnen Siebböden : | 6 % |
| i) Verhältnis von Bodenabstand zu Höhe des Ablaufschachtes : | 4,29 |
| k) Verhältnis von Höhe des Ablaufschachtes zu Kolonnendurchmesser : | 0,35 |
| l) Verhältnis von Höhe des Ablaufschachtes zu Lochdurchmesser : | 70 |
| m) Verhältnis von Höhe des Ablaufschachtes zu Abstand zwischen unterem Ende des Zulaufschachtes und dem darunter befindlichen Boden : | 4,67 |
| n) Zwischen Kolonnenmantel und Siebboden bestand ein Randspalt von | 2±1 mm |

## Beispiel 2

Es wurde analog Beispiel 1 verfahren, jedoch betrug die Laufzeit des Versuches 4 Tage und der Restbenzingehalt der eingesetzten Suspension, bezogen auf Feststoff, 7 bis 8 Gew.%. Die im Sumpf der Kolonne anfallende Suspension enthielt 0,8 Gew.% Restbenzin.

## Beispiel 3

Es wurde analog Beispiel 1 verfahren, jedoch betrugen die Laufzeit des Versuches 6 Tage, der Druck am untersten Boden 1,6 bar, die Dampftemperatur 108 °C und die Temperatur am Kolonnenkopf 107 °C. Der Restbenzingehalt der eingesetzten Suspension, bezogen auf Feststoff, betrug 7 bis 8 Gew.%. Die im Sumpf der Kolonne anfallende Suspension enthielt 1,3 Gew.% Restbenzin.

## Beispiel 4

Es wurde analog Beispiel 1 verfahren, jedoch betrugen die Laufzeit des Versuches 6 Tage, der Druck am untersten Boden 1,9 bar, die Dampftemperatur 114 °C und die Temperatur am Kolonnenkopf 113 °C. Der Restbenzingehalt der eingesetzten Suspension betrug 3 Gew.%, bezogen auf Feststoff. Die im Sumpf der Kolonne anfallende Suspension enthielt 0,7 Gew.% Restbenzin.

**Ansprüche**

1. Verfahren zur Entfernung von gesättigten flüssigen Restkohlenwasserstofften mit mindestens 5 C-Atomen im Molekül oder deren Gemische aus Polyolefinen, die bei der katalytischen Olefinpolymerisation in Gegenwart von an sich bekannten Katalysatormischungen aus Schwermetallverbindungen und metallorganischen Verbindungen erhalten wurden, mittels Wasser und Dampf, wobei der Restkohlenwasserstoffgehalt im Polyolefin etwa 10-50 Gew.% beträgt, dadurch gekennzeichnet, daß man

A. das kohlenwasserstoffhaltige Polyolefin in eine wässerige, emulgatorhaltige Lösung, deren Oberflächenspannung bei 20 °C gegen Luft 50-68 dyn/cm ($10^{-3}$ N/m) beträgt, einträgt und das Gemisch durch Rühren in eine homogene Dispersion überführt, wobei der Anteil des Polyolefins in der wässerigen Dispersion 10-40 Gew.% beträgt ; daß man

B. die Dispersion in dem Maße in den oberen Teil einer mit 5-30 Siebböden und Überlaufwehren ausgestatteten Kolonne einleitet und im Gegenstrom mit 100 bis 120 °C heißem Wasserdampf behandelt, daß

a) das Verhältnis von Dispersionsvolumen [$m^2$] auf einem Siebboden zu freiem Querschnitts-anteil des Siebbodens [$m^2$] 1 bis 8, vorzugsweise 1,5 bis 2,5, beträgt, daß

b) das Verhältnis von eingeleiteter Dispersionsmenge [$m^3$] pro Zeiteinheit (h) zu freiem Querschnittsanteil das Siebbodens [$m^2$] 150 bis 600 beträgt, daß

c) die spezifische Belastung der Kolonne, definiert durch die pro Zeiteinheit [h] und pro $m^2$ Kolonnenquerschnittsfläche zugeführte Dispersionsmenge [$m^3$] 5 bis 35, vorzugsweise 15 bis 30, beträgt, daß

d) die spezifische Dampfbelastung der Kolonne, definiert durch die pro Zeiteinheit h und pro $m^2$ Kolonnenquerschnittsfläche eingeleitete Dampfmenge 1 000 bis 4 000, vorzugsweise 1 500 bis 2 500 [kg/($m^2 \cdot$ h)], ist, daß

e) die mittlere Verweilzeit der Dispersion auf dem einzelnen Siebboden 0,1 bis 2,5, vorzugsweise 0,3 bis 0,6, Minuten beträgt, und daß man

C. vom Sumpf der Kolonne die kohlenwasserstofffreie wässerige Polyolefindispersion abzieht und das Polyolefin vom Wasser trennt, während am Kolonnenkopf ein Kohlenwasserstoff/Wasser-Azeotrop bzw. Azeotropengemisch abdestilliert, das in einem Kühler kondensiert und in einem nachfolgenden

5

## 0 014 314

Abscheider getrennt wird, wobei die Temperatur am Kolonnenkopf über dem Siedepunkt des abzutrennenden Kohlenwasserstoff/Wasser-Azeotrops liegt.

2. Verfahren nach Anspruch 1, dadurch gekennzeichnet, daß die Restkohlenwasserstoffe Hexan oder Benzin sind.

3. Verfahren nach Anspruch 1 oder 2, dadurch gekennzeichnet, daß man aus Polyäthylen oder Polypropylen die Restkohlenwasserstoffe entfernt.

4. Verfahren nach Anspruch 1-3, dadurch gekennzeichnet, daß man als Emulgator äthoxylierte Stearinsäure einsetzt.

5. Siebbodenkolonne zur kontinuierlichen Entfernung von Restkohlenwasserstoffen aus Polyolefinen mit mehreren, in einem Kolonnenmantel übereinander und mit gleichem Abstand voneinander angeordneten gelochten Böden, wobei zwischen jedem Boden und dem Kolonnenmantel ein über den Umfang gleichmäßiger, möglichst kleiner Spalt freigelassen ist, und wobei jeder Boden von einem exzentrisch angeordneten Ablaufschacht durchdrungen ist, und wobei oberhalb jedes Bodens ein exzentrisch angeordneter Zulaufschacht endet, und wobei unterhalb des Zulaufschachtes auf dem Boden eine Fläche undurchlässig ist, welche ein- bis zweimal so groß wie die Querschnittsfläche des Zulaufschachtes ist, dadurch gekennzeichnet, daß

a) das Verhältnis von Bodenabstand zu Höhe des Ablaufschachtes 4-5 beträgt, daß

b) das Verhältnis von Höhe des Ablaufschachtes zu Kolonnendurchmesser 1,1 bis 0,1 beträgt, daß

c) das Verhältnis von Höhe des Ablaufschachtes zu Lochdurchmesser der gelochten Böden 70 bis 220 beträgt, daß

d) das Verhältnis von Höhe des Ablaufschachtes zu Abstand zwischen dem unteren Ende des Zulaufschachtes und dem darunter befindlichen Boden 2,5 bis 9 beträgt, daß

e) die Bodenzahl 5 bis 30 beträgt, und daß

f) die freie Querschnittsfläche 3 bis 10 % der Kolonnenquerschnittsfläche beträgt.


### Claims

1. Process for removing saturated liquid residual hydrocarbons containing at least 5 carbon atoms in the molecule or mixtures thereof from polyolefins which are obtained by subjecting $\alpha$-olefins to catalytic polymerization in the presence of catalyst mixtures known as such based on heavy metal compounds and organometal compounds, by means of water and steam, the polyolefin containing about 10-50 weight % of residual hydrocarbons, characterized in that

A. the hydrocarbon-containing polyolefin is introduced into an aqueous emulsifier-containing solution having a surface tension at 20 °C, with respect to air, of about 50 to 68 dynes/cm and the resulting mixture is converted by stirring it to a homogeneous dispersion containing about 10 to 40 weigt % of the polyolefin ;

B. the dispersion is introduced into the upper portion of a column provided with 5 to 30 sieve plates and overflow weirs and contacted countercurrently with steam of about 100 to 120 °C, under conditions necessary

a) to provide a ratio of dispersion volume (in $m^3$) on a sieve plate to free cross sectional sieve plate area (in $m^2$) of 1 to 8, preferably 1.5 to 2.5 ;

b) to provide a ratio of dispersion quantity ($m^3$) admitted per unit time (h) to free cross-sectional sieve plate area ($m^2$) of 150 to 600 ;

c) to operate the column under a specific load, defined by the quantity of dispersion ($m^3$) admitted per unit time (h) per $m^2$ cross-sectional area of the column, of 5 to 35, preferably 15 to 30 ;

d) to operate the column under a specific steam load, defined by the quantity of steam admitted per unit time (h) per $m^2$ cross-sectional area of the column, of 1 000 to 4 000, preferably 1 500 to 2 500 [$kg/m^2 \cdot h$] ;

e) to establish a mean sojourn time of the dispersion on each of the individual sieve plates of 0.1 to 2.5, preferably 0.3 to 0.6 minute, and

C. an aqueous polyolefin dispersion free from hydrocarbons is removed from the base portion of the column, the polyolefin is separated from the water and a hydrocarbon/water-azeotrope or azeotropic mixture is distilled off near the column head and condensed in a condenser, and separated into its components in a separator downstream of the condenser, the temperature in the column head being higher than the boiling point of the hydrocarbon/water-azeotrope to be separated.

2. Process as claimed in claim 1, wherein the residual hydrocarbons are hexane or gasoline.

3. Process as claimed in claim 1 or 2, wherein the residual hydrocarbons are separated from polyethylene or polypropylene.

4. Process as claimed in claims 1 to 3, wherein the emulsifier is ethoxylated stearic acid.

5. Sieve plate column for the continous removal of residual hydrocarbons from polyolefins comprising a plurality of perforated plates which are arranged one above another inside a column shell and spaced apart at equal separations, a gap as small as possible being left along the periphery between each plate and the column shell, each of said plates having an eccentrically draining shaft passed through it, an eccentrically arranged feed shaft terminating above each plate ; and a surface portion on the plate,

# 0 014 314

below the feed shaft, being impermeable, said impermeable surface portion being one to two times the cross-sectional area of the conduit, characterized in that :

    a) the ratio of plate spacing to height of draining shaft is 4 to 5 ;

    b) the ratio of height of draining shaft to column diameter is 1.1 to 0.1 ;

    c) the ratio of height of draining shaft to diameter of perforations in perforated plates is 70 to 220 ;

    d) the ratio of height of draining shaft to separation between lower end of feed shaft and the plate above it is 2.5 to 9 ;

    e) the column comprises 5 to 30 plates ; and

    f) the free cross-sectional area is 3 to 10 % the cross-sectional area of the column.

## Revendications

1. Procédé pour éliminer des hydrocarbures résiduels saturés liquides contenant au moins 5 atomes de carbone dans la molécule ou leurs mélanges contenus dans des polyoléfines obtenues par polymérisation catalytique d'α-oléfines en présence de mélanges catalyseurs connus en soi à base de composés de métaux lourds et de composés organométalliques, à l'aide d'eau et de vapeur d'eau, la teneur en hydrocarbures résiduels de la polyoléfine représentant d'environ 10 à 50 % en poids, caractérisé en ce que :

A. on introduit la polyoléfine contenant les hydrocarbures dans une solution aqueuse contenant un agent émulsionnant et dont la tension superficielle à 20 °C, par rapport à l'air, est de 50 à 68 dynes/cm ($10^{-3}$ N/m) et on convertit le mélange par agitation en une dispersion homogène contenant 10 à 40 % de son poids de la polyoléfine ;

B. on envoie la dispersion dans la partie supérieure d'une colonne équipée de 5 à 30 plateaux à tamis et déversoirs et on la traite à contre-courant par de la vapeur d'eau portée à une température de 100 à 120 °C, dans des conditions telles que ;

    a) le rapport du volume de la dispersion [m³] sur un plateau à tamis à la partie de section libre du plateau à tamis [m²] est de 1 à 8, de préférence de 1,5 à 2,5,

    b) le rapport de la quantité de dispersion introduite [m³] par unité de temps (heures) à la partie de section libre du plateau à tamis [m²] est de 150 à 600,

    c) la charge spécifique de la colonne, définie par la quantité de dispersion [m³] introduite par unité de temps (heures) et par m² de surface de section de la colonne est de 5 à 35, de préférence de 15 à 30,

    d) la charge spécifique en vapeur d'eau de la colonne, définie par la quantité de vapeur introduite par unité de temps (heures) et par m² de surface de section de la colonne est de 1 000 à 4 000, de préférence de 1 500 à 2 500 [kg/(m² · h)],

    e) la durée de séjour moyenne de la dispersion sur le plateau à tamis individuel est de 0,1 à 2,5, de préférence de 0,3 à 0,6 minute et,

C. on évacue du pied de la colonne la dispersion aqueuse de polyoléfine débarrassée des hydrocarbures et on sépare la polyoléfine de l'eau, cependant qu'en tête de colonne on distille un azéotrope ou un mélange d'azéotropes hydrocarbure/eau qu'on condense dans un réfrigérant et qu'on sépare dans un séparateur placé à la suite, la température en tête de colonne étant supérieure au point d'ébullition de l'azéotrope hydrocarbure/eau à séparer.

2. Procédé selon la revendication 1, caractérisé en ce que les hydrocarbures résiduels consistent en hexane ou essence minérale.

3. Procédé selon la revendication 1 ou 2, caractérisé en ce que l'on élimine les hydrocarbures résiduels contenus dans un polyéthylène ou un polypropylène.

4. Procédé selon les revendications 1 à 3, caractérisé en ce que l'on utilise en tant qu'agent émulsionnant de l'acide stéarique éthoxylé.

5. Colonne à plateaux à tamis pour l'élimination continue des hydrocarbures résiduels contenus dans les polyoléfines, à plusieurs plateaux perforés disposés les uns au-dessus des autres dans une enveloppe de colonne et à égale distance entre eux, avec une fente libre régulière, aussi petite que possible, sur la périphérie entre chaque plateau et l'enveloppe de colonne, chacun des plateaux étant traversé par un puits d'écoulement en disposition excentrique, et un puits d'alimentation en disposition excentrique débouchant au-dessus de chacun des plateaux, avec, sur le plateau, au-dessous du puits d'alimentation, une surface étanche égale à une à deux fois la surface de section du puits d'alimentation, caractérisée en ce que :

    a) le rapport de la distance entre plateaux à la hauteur du puits d'écoulement est de 4 à 5,

    b) le rapport de la hauteur du puits d'écoulement au diamètre de la colonne est de 1,1 à 0,1,

    c) le rapport de la hauteur du puits d'écoulement au diamètre des orifices des plateaux perforés est de 70 à 220,

    d) le rapport de la hauteur du puits d'écoulement à la distance entre l'extrémité inférieure du puits d'alimentation et le plateau qui se trouve au-dessous est de 2,5 à 9,

    e) le nombre des plateaux est de 5 à 30 et,

    f) la surface de section libre représente de 3 à 10 % de la surface de section de la colonne.